# EUROPÄISCHE PATENTANMELDUNG

(11) **EP 1 329 665 A1**
(43) Veröffentlichungstag der Anmeldung: **23.07.2003**
(21) Anmeldenummer: 02025867.9
(22) Anmeldetag: 19.11.2002
(51) Int. Cl.: F21V 8/00

(54) **Plattenleuchte**

(30) Priorität: 17.01.2002 DE 10201556
(71) Anmelder: Ludwig Leuchten KG, 86415 Mering (DE)
(72) Erfinder: Ludwig, Alexander, 86392 Heinrichshofen (DE); Csizy, Tibor, 86415 Mering (DE); Rieger, Rudolf, 86415 Mering (DE)
(74) Vertreter: Vetter, Ewald Otto

(57) **Zusammenfassung**

Plattenleuchte enthaltend eine Prismenplatte mit einer glatten Plattenoberfläche (6) und einer durch Längsrippen (12) gebildeten Prismenoberfläche (8); eine Deckplatte (16) aus lichtdurchlässigem Material auf der Prismenoberfläche (8); und eine Lichtleiterplatte (18) auf der glatten Plattenoberflächen der Prismenplatte (4). Die Platten (4, 16, 18) sind mindestens über den größten Anteil der Plattenbreite quer zur Längsrichtung der Längsrippen (12) der Prismenplatte (4) fortlaufend in gleicher Krümmungsrichtung gekrümmt, wobei die Längsrippen (12) auf der Innenseite des Krümmungsbogens der Prismenplatte (4) liegen.

## Beschreibung

Die Erfindung betrifft eine Plattenleuchte gemäß dem Oberbegriff von Anspruch 1.

Eine Plattenleuchte dieser Art ist aus der EP 1 106 905 A2 bekannt.

Durch die Erfindung soll die Aufgabe gelöst werden, eine bessere Rundum-Entblendung zu erzielen.

Eine weitere Aufgabe der Erfindung besteht darin, den Wirkungsgrad zu verbessern.

Die Plattenleuchte der Erfindung soll konstruktiv einfach und preiswert gestaltet werden.

Diese Aufgaben werden gemäß der Erfindung durch die kennzeichnenden Merkmale von Anspruch 1 gelöst.

Demgemäß betrifft die Erfindung eine Plattenleuchte, gekennzeichnet durch eine Prismenplatte aus lichtdurchlässigem Material, welche eine glatte Plattenoberfläche und auf der dazu abgewandten Plattenseite eine Prismenoberfläche aufweist, die aus einer Vielzahl von zueinander parallelen, sich in einer Plattenlängsrichtung erstreckenden Längsrippen besteht, welche in der Prismenplatte gebildet sind; eine Deckplatte aus lichtdurchlässigem Material, welche beidseitige eine glatte Plattenoberfläche hat und mit einer dieser glatten Plattenoberflächen auf der Prismenoberfläche der Prismenplatte aufliegt; eine Lichtleiterplatte, welche beidseitig je eine glatte Plattenoberfläche hat und mit einer dieser glatten Plattenoberflächen auf der glatten Plattenoberfläche der Prismenplatte aufliegt, wobei die Lichtleiterplatte mindestens eine Stirnfläche aufweist, die zum Einbringen von Licht von einem Leuchtmittel in die Lichtleiterplatte ausgebildet ist, und wobei die Platten zur Lichtübertragung von der Lichtleiterplatte durch die Prismenplatte und von dieser durch die Deckplatte in einen der Deckplatte benachbarten Raum ausgebildet sind; ferner dadurch gekennzeichnet, dass die Prismenplatte, die Deckplatte und die Lichtleiterplatte über den größten Teil ihrer Plattenbreite aufeinander liegen und quer zur Längsrichtung der Längsrippen der Prismenplatte fortlaufend in gleicher Krümmungsrichtung gekrümmt sind, wobei die Längsrippen auf der Innenseite des Krümmungsbogens der Prismenplatte liegen.

Es hat sich überraschenderweise gezeigt, dass die Erfindung sowohl einen besseren Entblendungswert als auch einen besseren Wirkungsgrad ergibt. Die Plattenleuchte der Erfindung ist konstruktiv einfach und preiswert herzustellen und betriebssicher.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
Fig. 1 eine Stirnansicht einer Plattenleuchte gemäß der Erfindung, in der Ebene I-I von Fig. 2 in der angegebenen Pfeilrichtung gesehen,
Fig. 2 eine Draufsicht auf die Plattenleuchte von Fig. 1 in stark verkleinertem Maßstab,
Fig. 3 eine Stirnansicht einer weiteren Ausführungsform der Erfindung in Richtung der Ebene I-I von Fig. 2 gesehen,
Fig. 4 eine Stirnansicht einer nochmals weiteren Ausführungsform der Erfindung in Richtung der Ebene I-I von Fig. 2 gesehen.

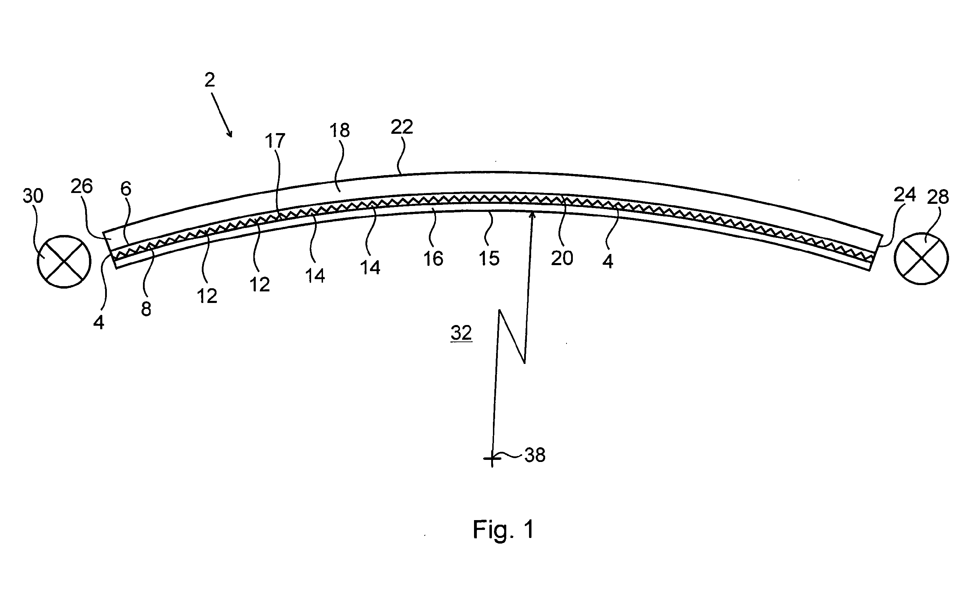

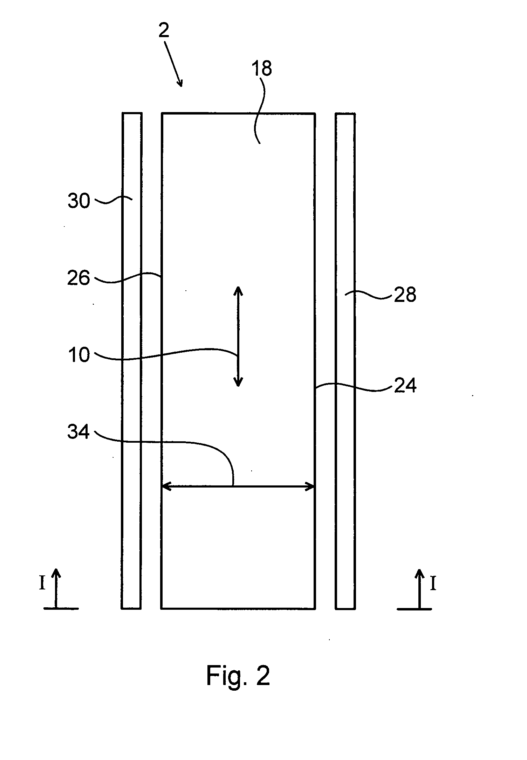

Die in Fig. 1 gezeigte Plattenleuchte 2 gemäß der Erfindung enthält eine Prismenplatte 4 aus lichtdurchlässigem Material, welche eine glatte Plattenoberfläche 6 und auf der dazu abgewandten Plattenseite eine Prismenoberfläche 8 aufweist. Die Prismierung ist durch eine Vielzahl von zueinander parallelen, sich in einer Plattenlängsrichtung 10 (Fig. 2) erstreckende Längsrippen in der Prismenplatte 4 gebildet. Die Längsrippen 12 bilden zwischen sich Längsnuten 14. Die Längsrippen 12 und die Längsnuten 14 bilden zusammen eine in Plattenquerrichtung verlaufende Sägezahnform mit gleichen oder ungleichen Zahnflanken.

Eine Deckplatte 16 aus lichtdurchlässigem Material hat beidseitig eine glatte Plattenoberfläche 15 bzw. 17 und liegt mit einer dieser glatten Oberflächen 17 auf der Prismenoberfläche 8 der Prismenplatte 4.

Eine Lichtleiterplatte 18, welche beidseitig je eine glatte Plattenoberfläche 20 bzw. 22 hat und mit einer dieser glatten Plattenoberflächen 20 auf der glatten Plattenoberfläche 6 der Prismenplatte 4 aufliegt, hat mindestens eine Stirnfläche 24 und/oder 26, die zum Einbringen von Licht von einem Leuchtmittel 28 bzw. 30 in die Lichtleiterplatte 18 ausgebildet ist. Die mindestens eine Stirnfläche 24 und/oder 26 ist vorzugsweise eine längsverlaufende Stirnfläche, welche parallel zu den Längsrippen 12 der Prismenoberfläche 8 der Prismenplatte 4 verläuft. Die Ausführungsform von Fig. 1 enthält auf beiden Längsseiten je eine solche Stirnfläche 24 bzw. 26 und dieser gegenüberliegend je ein Leuchtmittel 28 bzw. 30. Das Leuchtmittel kann eine Leuchtstofflampe oder eine Glühbirne ein anderes Leuchtmittel sein.

Die Platten 4, 16 und 18 sind zur Lichtübertragung von der Lichtleiterplatte 18 durch die Prismenplatte 4 und von dieser durch die Deckplatte 16 in den an diese Deckplatte 16 angrenzenden Raum 32 ausgebildet.

Gemäß der Erfindung ist die Prismenplatte 4, die Deckplatte 16 und die Lichtleiterplatte 18, welche über ihre gesamte Breite aneinander anliegen, über den größten Anteil ihrer Breite quer zur Längsrichtung der Längsrippen 12 der Prismenplatte 4 fortlaufend in gleicher Krümmungsrichtung gekrümmt, wobei die Längsrippen 12 auf der Innenseite des Krümmungsbogens der Prismenplatte 4 liegen.

Fig. 2 zeigt durch Doppelpfeile je die Längsrichtung 10 und die Querrichtung 34 der Plattenleuchte.

Die Erfindung ergibt einen besseren Entblendungswert und einen besseren Beleuchtungs-Wirkungsgrad.

Gemäß den bevorzugten Ausführungsformen der Erfindung ist die Plattenkombination 4, 16, 18 über ihre gesamte Breite quer zur Längsrichtung der Längsrippen 12 fortlaufend in gleicher Krümmungsrichtung gekrümmt.

Die Krümmung kann sich über mehrere verschiedene Krümmungsradien erstrecken. Gemäß der bevorzugten Ausführungsformen erstreckt sich jedoch die Krümmung der Plattenkombination 4, 16, 18 nur um eine einzige Krümmungsachse 38 als Krümmungsmittelpunkt.

Die Prismenplatte 4, die Deckplatte 16 und die Lichtleiterplatte 18 bestehen jeweils aus Glas oder Kunststoff. Das Material ist vorzugsweise ein klares Material (im Gegensatz zu einem matten Material). Möglich sind auch gefärbte, lichtdurchlässige Kunststoffe oder Glasarten zur Erzeugung von farbigem Licht.

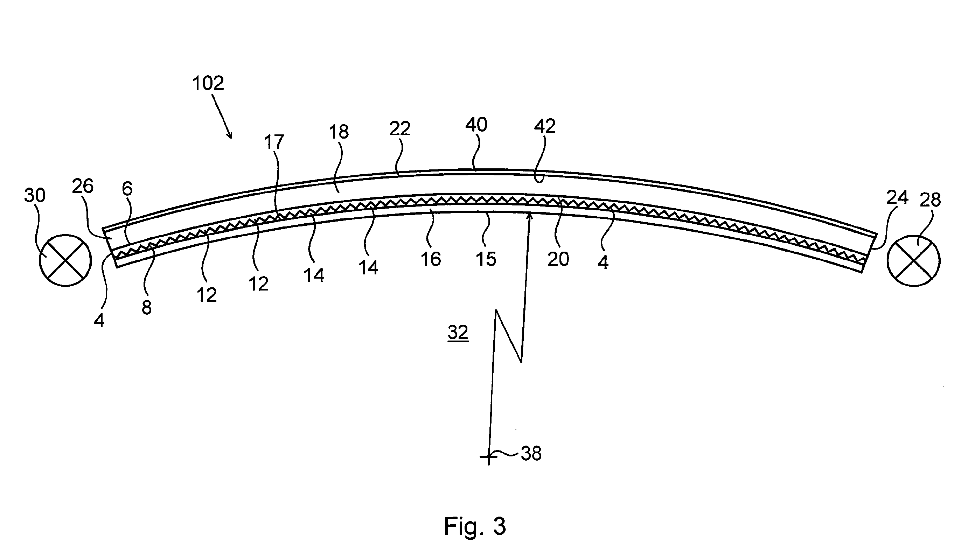

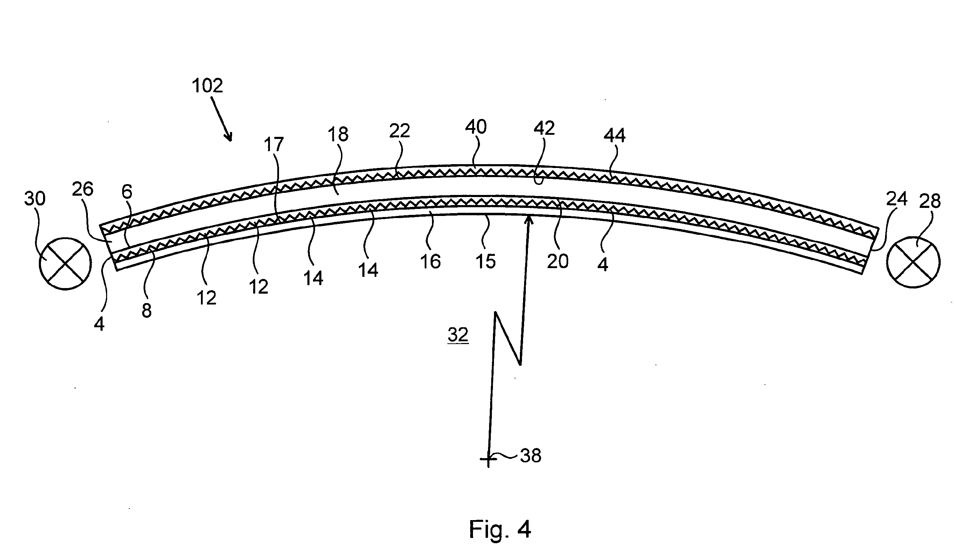

Die Ausführungsformen von Fig. 3 und Fig. 4 enthalten identisch die gleichen Teile wie die Ausführungsform von Fig. 1. Diese Teile sind deshalb mit den gleichen Bezugszahlen versehen und werden nicht nochmals beschrieben. Die Lichtleiterplatte 102 von Fig. 3 enthält zusätzlich eine Reflektorplatte 40, welche auf der Lichtleiterplatte 18, auf deren von der Prismenplatte 4 abgewandten Plattenoberfläche 22 aufliegt und an deren Krümmung angepaßt ist.

Die an die Lichtleiterplatte 18 angrenzende Plattenoberfläche 42 der Reflektorplatte 40 kann glatt (Fig. 3) oder profiliert (Fig. 4), matt, glänzend oder hochglänzend sein. Bei einer profilierten Ausbildung der an den Lichtleiter 18 angrenzenden Plattenoberfläche 42 der Reflektorplatte 40 ist die Profilierung vorzugsweise durch in der Reflektorplatte 40 gebildete Längsrippen 44 gebildet, welche parallel zu den Längsrippen 12 der Prismenplatte 4 verlaufen, wie dies Fig. 4 zeigt.

## Patentansprüche

1. Plattenleuchte, **gekennzeichnet durch** eine Prismenplatte (4) aus lichtdurchlässigem Material, welche eine glatte Plattenoberfläche (6) und auf der dazu abgewandten Plattenseite eine Prismenoberfläche (8) aufweist, die aus einer Vielzahl von zueinander parallelen, sich in einer Plattenlängsrichtung erstreckenden Längsrippen (12) besteht, welche in der Prismenplatte (4) gebildet sind; eine Deckplatte (16) aus lichtdurchlässigem Material, welche beidseitige eine glatte Plattenoberfläche (15, 17) hat und mit einer dieser glatten Plattenoberflächen auf der Prismenoberfläche (8) der Prismenplatte (4) aufliegt; eine Lichtleiterplatte (18), welche beidseitig je eine glatte Plattenoberfläche (20, 22) hat und mit einer dieser glatten Plattenoberflächen (20) auf der glatten Plattenoberfläche (6) der Prismenplatte (4) aufliegt, wobei die Lichtleiterplatte (18) mindestens eine Stirnfläche (24, 26) aufweist, die zum Einbringen von Licht von einem Leuchtmittel (28, 30) in die Lichtleiterplatte (18) ausgebildet ist, und wobei die Platten (4, 16, 18) zur Lichtübertragung von der Lichtleiterplatte (18) **durch** die Prismenplatte (4) und von dieser **durch** die Deckplatte (16) in einen der Deckplatte benachbarten Raum (32) ausgebildet sind; ferner **dadurch gekennzeichnet, dass** die Prismenplatte (4), die Deckplatte (16) und die Lichtleiterplatte (18) über den größten Teil ihrer Plattenbreite aufeinander liegen und quer zur Längsrichtung der Längsrippen (12) der Prismenplatte (4) fortlaufend in gleicher Krümmungsrichtung gekrümmt sind, wobei die Längsrippen auf der Innenseite des Krümmungsbogens der Prismenplatte liegen.

2. Plattenleuchte nach Anspruch 1,
**dadurch gekennzeichnet,**
**dass** die Prismenplatte (4), die Deckplatte (16) und die Lichtleiterplatte (18) über ihre gesamte Plattenbreite quer zur Längsrichtung der Längsrippen (12) der Prismenplatte (4) fortlaufend in gleicher Krümmungsrichtung gekrümmt sind.

3. Plattenleuchte nach mindestens einem der vorhergehenden Ansprüche,
**dadurch gekennzeichnet,**
**dass** die gesamte Krümmung der Plattenkombination, welche die Prismenplatte (4), die Deckplatte (16) und die Lichtleiterplatte (18) enthält, um eine einzige Krümmungsachse (38) als Krümmungsmittelpunkt sich erstreckt.

4. Plattenleuchte nach mindestens einem der vorhergehenden Ansprüche,
**dadurch gekennzeichnet,**
**dass** auf der Lichtleiterplatte (18), auf ihrer von der Prismenplatte abgewandten Plattenoberseite (22), eine Reflektorplatte (40) aufliegt, die an die Lichtleiterplatte angepaßt gekrümmt ist.

5. Plattenleuchte nach Anspruch 4,
**dadurch gekennzeichnet,**
**dass** die auf der Lichtleiterplatte (18) aufliegende, Licht reflektierende Plattenoberfläche (42) der Reflektorplatte (40) glatt ist.

6. Plattenleuchte nach Anspruch 4,
**dadurch gekennzeichnet,**
**dass** die auf der Lichtleiterplatte (18) aufliegende, Licht reflektierende Plattenoberfläche (42) der Reflektorplatte (40) profiliert ist durch eine Vielzahl von schräg zueinander angeordneten Profilflächen.

7. Plattenleuchte nach Anspruch 6,
**dadurch gekennzeichnet,**
**dass** die Plattenoberfläche (42) der Reflektorplatte (40) eine Vielzahl von in ihr gebildeten, parallel zueinander verlaufende Längsrippen (44) als Profilierung aufweist, deren Rippenseitenflächen sagezahnförmig schräg zueinander angeordnet sind und die Profilflächen bilden, und dass diese Längsrippen (44) parallel zu den Längsrippen (12) der Prismenplatte (4) verlaufen.
